# EUROPEAN PATENT SPECIFICATION

(11) **EP 3 791 765 B1**
(45) Date of publication and mention of the grant of the patent: **07.06.2023**
(21) Application number: 20195404.7
(22) Date of filing: 10.09.2020
(51) Int. Cl.: A47J 31/46

(54) **COFFEE MAKER WITH AUXILIARY CONDUIT**
KAFFEEMASCHINE MIT HILFSLEITUNG
MACHINE À CAFÉ AVEC CONDUIT AUXILIAIRE

(30) Priority: 16.09.2019 IT 201900016400
(43) Date of publication of application: 17.03.2021
(73) Proprietor: LELIT S.R.L., 25045 Castegnato (Brescia) (IT)
(72) Inventor: EPIS, Mauro, I-25045 Castegnato, BRESCIA (IT)
(74) Representative: Gamba, Alessandro

(56) References cited:
- FR-A1- 2 692 129
- US-A- 3 314 357
- US-A1- 2009 101 019
- US-A1- 2018 360 260

## Description

The object of the present invention is a coffee maker for domestic use and a method for dispensing a coffee-based beverage.

In this disclosure in particular, "coffee maker for domestic use" means that type of maker suitable to dispense an infused beverage like coffee which due to sizes and use, is suitable to be located in a household environment. I.e. the "coffee maker for domestic use" has compact sizes, unlike coffee shop coffee makers, which have significant sizes (comprising, for example a plurality of filter holders in which the coffee powder is introduced and through which the beverage is dispensed). I.e. the "coffee maker for domestic use" moreover has the object of dispensing and is optimized to dispense a curbed number of coffees, unlike coffee shop coffee makers specifically designed to dispense a significant number of coffees, also continuously throughout a day.

In further detail, the coffee maker the object of the present invention is provided with a dispensing group of the E61 type. In other words, the coffee maker the object of the present invention dispenses coffee through a dispensing group of the E61 type, integrating the operating principles and having the shape, sizes, materials of the known group "E61 Faema". The dispensing group of the E61 type is well-known in the specialized circles and is also the object of patent proprietary specifications such as documents nos. US3230974 and US3314357. Other relevant examples of coffee maker are disclosed in US2018/360260A1, US2009/101019A1 and FR2692129A1.

In particular, the solutions of coffee makers, with particular reference to those for domestic use, have detected how the E61 dispensing group takes a given time, about 30 minutes, to reach an optimal temperature for dispensing a coffee. In detail, said optimal temperature is that temperature by virtue of which the dispensed coffee is not too hot or too cold.

The need is therefore strongly felt to resolve such a problem by providing a coffee maker provided with a dispensing group of the E61 type capable of reaching an optimal temperature for dispensing coffee in a shorter time with respect to the prior art.

It is the object of the present invention to meet the aforesaid need by proposing a coffee maker for domestic use comprising a dispensing group of the E61 type according to that claimed in claim 1, and a method for dispensing a coffee-based beverage according to that claimed in claim 13.

The dependent claims describe preferred embodiments of the invention.

Further features and advantages of the coffee maker and of the dispensing method according to the invention will in any case be apparent from the following description of preferred embodiments thereof, given only by way of non-limiting, indicative example, with reference to the accompanying Figures, in which:

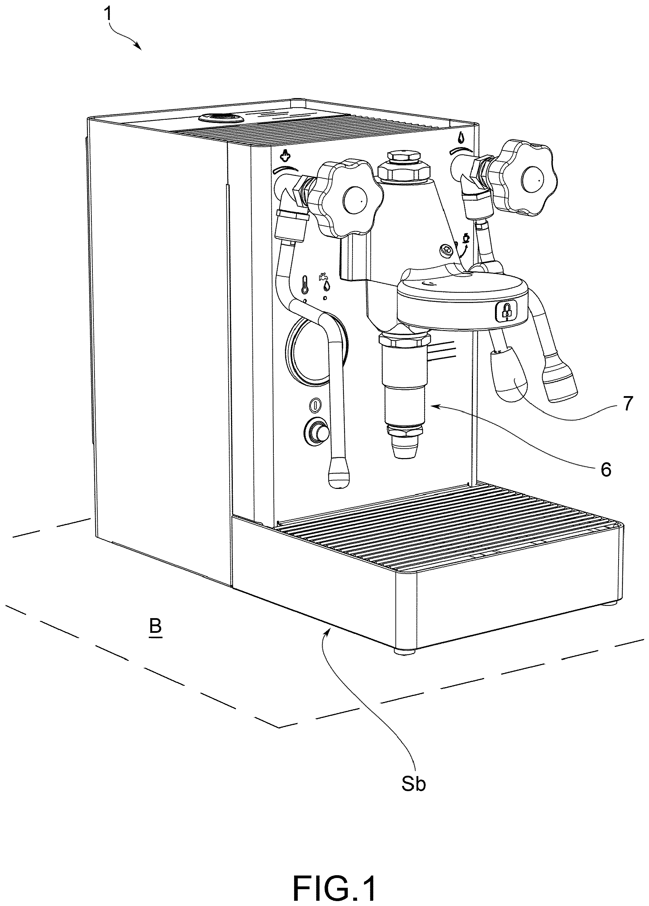

- Figure 1 shows a perspective view of a coffee maker;

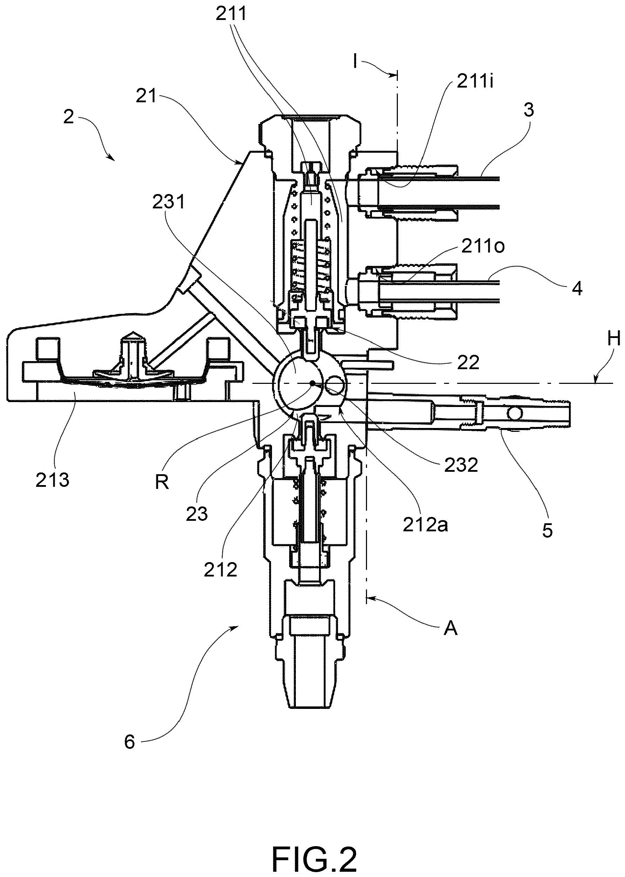

- Figure 2 shows a cross section of a dispensing group of the E61 type according to a preferred embodiment of the present invention; and

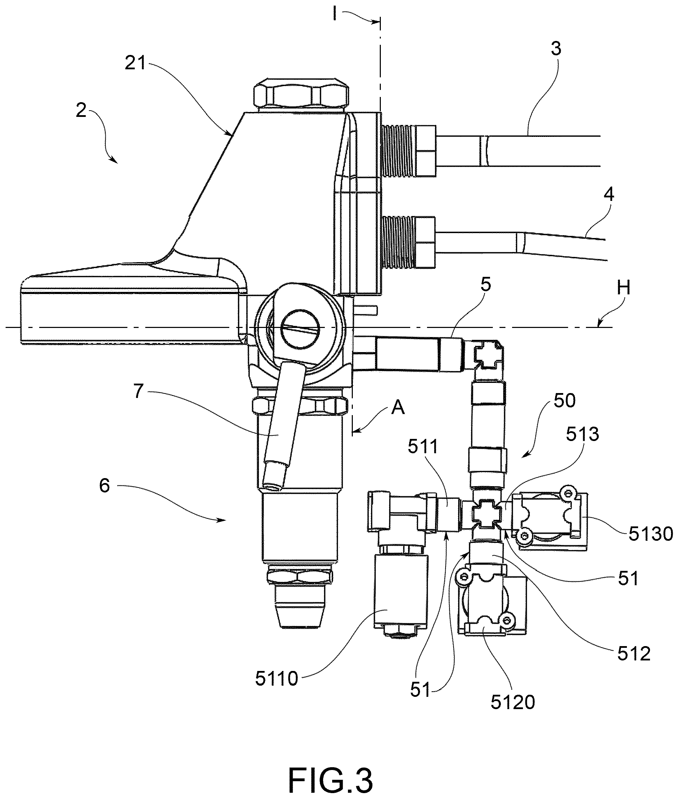

- Figure 3 shows a side view of the dispensing group.

Numeral 1 in said drawings indicates a coffee maker according to the invention, as a whole.

According to the present invention, the coffee maker 1 for domestic use comprises a dispensing group 2, for example of the E61 type, suitable to be connected to a first heating group of a first fluid. In other words, a first fluid from a first heating group flows in the dispensing group 2.

The dispensing group 2 preferably is of the E61 type.

According to the present invention, the dispensing group 2 comprises a group body 21, sealing means 22 and command means 23.

A filter holder is removably mountable on the group body 21, and a first chamber 211, a second chamber 212, and a third chamber 213 are fluidically cascade-formed in such a group body 21. The first chamber 211 is provided with an inlet mouth 211i and an outlet mouth 211o; the third chamber 213 is suitable to house the filter holder.

The sealing means 22 are partially housed in the first chamber 211 and in the second chamber 212 so as to block the flow of the first fluid between said first chamber and second chamber. Moreover, the sealing means are configurable between an open position, in which the first chamber 211 is in fluid communication with the third chamber 213, and a closed position, in which the first fluid is suitable to flow inside the first chamber 211, entering from the inlet mouth 211i and coming out of the outlet mouth 211o.

The command means 23 comprise a cam 231 which is housed in the second chamber 212. The cam is rotatable so as to selectively engage the sealing means by positioning them in the open position or in the closed position.

According to the present invention, the coffee maker further comprises a fluid inlet conduit 3, a fluid outlet conduit 4 and an auxiliary conduit 5.

The fluid inlet conduit 3 is fluidically connected to the inlet mouth 211i and is suitable to be connected to the first heating group. The first fluid is suitable to flow inside the fluid inlet conduit 3 so as to enter the first chamber 211.

The fluid outlet conduit 4 is fluidically connected to the outlet mouth 211o and is suitable to be connected to the first heating group. The first fluid is suitable to flow inside the fluid outlet conduit 4 so as to come out of the first chamber 211 and re-enter the first heating group.

According to an aspect of the invention, the second chamber 212 is provided with an auxiliary mouth 212a fluidically connected to an auxiliary conduit 5. Such an auxiliary conduit 5 is connectable to feeding and/or suctioning means of a second fluid. In other words, the second fluid is suitable to flow inside the auxiliary conduit 5.

According to an embodiment, the auxiliary mouth 212a is an inlet and/or an outlet for the second fluid. When the auxiliary mouth 212a is an inlet, the auxiliary conduit 5 is a feeding conduit for the second fluid; when the auxiliary mouth 212a instead is an outlet for the second fluid, the auxiliary conduit 5 is a conduit for discharging the second fluid. In other words, the auxiliary conduit 5 is a feeding conduit and/or a discharge conduit for the second fluid.

According to one embodiment, the coffee maker 1 comprises a manifold 50 which is fluidically connected to the auxiliary conduit 5. Moreover, such a manifold 50 is fluidically connected to a plurality of branches 51, preferably three, where each branch 511; 512; 513 of such a plurality of branches 51 comprises a solenoid valve 5110; 5120; 5130 for regulating the flow of the second fluid.

According to an embodiment, the flow of the second fluid is regulated by the solenoid valve 5110; 5120; 5130 of a branch 511; 512; 513 of the plurality of branches 51. In other words, if the solenoid valve of a branch is open and the solenoid valves of the remaining branches are closed, then the second fluid only comprises the fluid which flows in the branch whose solenoid valve is open.

According to an embodiment, the second fluid comprises a mixture of a plurality of fluids, in which each fluid of the plurality of fluids flows in a branch 511; 512; 513 of the plurality of branches 51 and the mixture of the plurality of fluids occurs along the auxiliary conduit 5. In other words, the flow of the second fluid, being delivered and/or being suctioned, which flows in the auxiliary conduit 5 is regulated by at least one solenoid valve 5110; 5120; 5130 of at least one branch 511; 512; 513 of the plurality of branches 51. In particular, if more than one solenoid valve is open, the second fluid comprises a mixture of a plurality of fluids, where the fluids comprised in such a mixture flow in the branches whose solenoid valves are open.

The coffee maker 1 preferably comprises the feeding and/or suctioning means and the first heating group of the first fluid.

According to one embodiment not shown in the drawings, the feeding and/or suctioning means comprise the first heating group. Such a first heating group is fluidically connected to the dispensing group 2 by means of the fluid inlet conduit 3, the fluid outlet conduit 4 and the auxiliary conduit 5.

The fluid inlet conduit 3, fluid outlet conduit 4 and one branch 511; 512; 513 of the plurality of branches 51 preferably come out of the first heating group, where such a branch is fluidically connected to the auxiliary conduit 5 by means of manifold 50.

In particular, when the first heating group is fluidically connected to the dispensing group 2 by means of the fluid inlet conduit 3, the fluid outlet conduit 4 and the auxiliary conduit 5, the first fluid is equal to the second fluid and preferably comprises water in the liquid state or in the gaseous state, i.e. in the form of vapor.

According to an embodiment, the first heating group comprises a heat exchanger and/or a boiler.

According to one embodiment not shown in the drawings, the feeding and/or suctioning means comprise a second heating group which is fluidically connected to the dispensing group 2 by means of the auxiliary conduit 5.

The second heating group preferably is fluidically connected to manifold 50 by means of one branch 511; 512; 513 of the plurality of branches 51.

In an embodiment not shown in the drawings, the first fluid comes from the first heating group and preferably comprises water in the liquid state and/or in the gaseous state; the second fluid instead comes from the second heating group and preferably comprises water in the liquid state and/or in the gaseous state. In other words, the first fluid and the second fluid come from different heating groups, however they both preferably comprise water in the liquid and/or gaseous state. A dual flow may be managed during the dispensing, i.e. the flow of the first fluid and the flow of the second fluid, by virtue of the presence of the first heating group and of the second heating group.

The second heating group preferably comprises a heat exchanger and/or a boiler.

According to an embodiment not shown in the drawings, the feeding and/or suctioning means comprise a plurality of feeding groups which are fluidically connected to the dispensing group 2 by means of the auxiliary conduit 5. Each feeding group of the plurality of feeding groups is suitable to feed the auxiliary conduit 5 with a respective fluid, such as for example water in the liquid state and/or gaseous state, or an alcohol solution, a detergent solution, milk or a combination thereof.

Each feeding group preferably is suitable to feed the auxiliary conduit 5 with a different fluid. Alternatively, each feeding group preferably is suitable to feed the auxiliary conduit 5 with the same type of fluid.

In an embodiment, each feeding group is fluidically connected to manifold 50 by means of one branch 511; 512; 513 of the plurality of branches 51. When the solenoid valve of a branch fed by a feeding group is open and the solenoid valves of the remaining branches are all closed, the second fluid only comprises the fluid which flows in the branch whose solenoid valve is open. Instead, when a plurality of solenoid valves of a respective plurality of branches fed by respective feeding groups is open, the second fluid comprises a mixture of a plurality of fluids, in which the fluids comprised in such a mixture flow in the branches whose solenoid valves are open.

According to an embodiment, the feeding and/or suctioning means comprise a fluid discharge group which is fluidically connected to the dispensing group 2 by means of the auxiliary conduit 5. Such a fluid discharge group is suitable to collect the residue of an infusion fluid after the infusion.

When the sealing means 22 are in open position, the first fluid and the second fluid preferably are mixed in the second chamber 212 and form an infusion fluid. In other words, the infusion fluid comprises a first fluid and a second fluid.

The residue of the infusion fluid in particular comprises water, or oil and grease deposited after the dispensing, coffee residues or a combination thereof.

According to an embodiment not shown in the drawings, after the dispensing has been carried out, the auxiliary conduit 5 regulates the suctioning of the flow of the infusion fluid residue so as to collect such an infusion fluid residue in the fluid discharge group. In further detail, when the auxiliary conduit 5 works by suctioning to collect the infusion fluid residue in the fluid discharge group, the infusion fluid residue comprises the residue of the first fluid and the residue of the second fluid.

According to one embodiment not shown in the drawings, the plurality of branches 51 comprises a first branch, a second branch, at least one feeding branch and a discharge branch. The first branch preferably is fluidically connected to the first heating group, the second branch is fluidically connected to the second heating group, the at least one feeding branch is fluidically connected to a feeding group of the plurality of feeding groups, and the discharge branch is fluidically connected to the fluid discharge group.

In an embodiment, the first fluid is equal to the second fluid.

According to an embodiment, the first fluid is different from the second fluid.

According to one embodiment, the second fluid comprises water in the liquid state and/or in the gaseous state.

In an embodiment, the second fluid comprises an alcohol solution.

According to an embodiment, the second fluid comprises a detergent solution.

In an embodiment, the second fluid comprises milk.

The coffee maker 1 preferably comprises a base surface Sb suitable to be substantially resting on a base plane B.

In an embodiment, cam 231 rotates around a hinge 232 which defines a cam rotation axis R substantially parallel to the base plane B. Moreover, such a hinge 232 lies on a hinge plane H containing the cam rotation axis R. The auxiliary mouth 212a formed in the second chamber 212 is in a first half-space delimited by the hinge plane H in a position proximal to the outlet mouth 211o, or is in the second half-space opposite to the first, in a distal position with respect to the outlet mouth 211o.

According to an alternative embodiment, the inlet mouth 211i and the outlet mouth 211o are aligned along an infusion plane I which is substantially orthogonal to the base plane B. Moreover, the auxiliary mouth 212a lies on an auxiliary plane A which is parallel to the infusion plane I.

The coffee maker 1 preferably comprises a pressure sensor mounted on the auxiliary conduit 5 in the vicinity of the auxiliary mouth 212a.

According to one embodiment, the coffee maker 1 comprises a temperature sensor mounted on the auxiliary conduit 5 in the vicinity of the auxiliary mouth 212a.

The coffee maker preferably comprises a tang 6 which, once the dispensing has been carried out, is suitable to discharge water, or deposited oil and grease, coffee residues or a combination thereof.

According to one aspect of the invention, the coffee maker comprises a coffee command lever 7 operatively connected to the cam so that the rotation of the cam is induced by acting on the coffee command lever 7.

According to one aspect of the invention, the method for dispensing a coffee-based beverage comprises the following steps:
- preparing the coffee maker 1;
- heating the first fluid with the first heating group;
- heating the second fluid with the first heating group or with the second heating group;
- arranging the sealing means 22 in the open position;
- mixing the first fluid and the second fluid in the second chamber 212 so as to form the infusion fluid;
- dispensing the beverage.

The coffee maker 1 preferably is provided with feeding and/or suctioning means, thereby the dispensing method further comprises a step of suctioning the residue of the infusion fluid through the actuation of such feeding and/or suctioning means at the end of the beverage dispensing.

According to an embodiment, the beverage dispensing method further comprises a preheating step, in which there is heated the second chamber 212 with the second fluid, which is at a different temperature and/or pressure from those of the first fluid.

Alternatively, the beverage dispensing method further comprises a preheating step, in which the second chamber 212 is heated with the second fluid, which is at an equal temperature and/or pressure to those of the first fluid.

According to one embodiment, the coffee maker 1 is provided with feeding and/or suctioning means which comprise the plurality of feeding groups fluidically connected to the dispensing group 2 by means of the auxiliary conduit 5. The dispensing method then provides for each feeding group of the plurality of feeding groups to feed the auxiliary conduit 5 with a respective fluid, such as for example water in the liquid state and/or gaseous state, or an alcohol solution, a detergent solution, milk or a combination thereof. Each fluid flows in a branch 511; 512; 513 of the plurality of branches 51 to then be mixed along the auxiliary conduit 5 so as to form the second fluid.

The beverage dispensing method preferably further comprises the pressure detection step, in which the pressure in the second chamber 212 is detected with the pressure sensor, and the feeding and/or suctioning means are actuated so as to bring the pressure of the second chamber above the threshold pressure in the event the pressure falls below a predetermined threshold value.

The beverage dispensing method preferably further comprises the temperature detection step, in which the temperature in the second chamber 212 is detected with the temperature sensor and the feeding and/or suctioning means are actuated so as to bring the temperature of the second chamber above the threshold temperature in the event the temperature falls below a predetermined threshold value.

Innovatively, the coffee maker and the dispensing method according to the present invention achieve the selected object, i.e. they allow the time required to dispense a coffee to be reduced with respect to the prior art. In particular, the coffee maker allows two flows to be managed so as to promote and speed up the dispensing of coffee. In further detail, when the sealing means are in closed position, the flow of the first fluid promotes the increase of the temperature in the first chamber, while the flow of the second fluid increases the temperature in the second and third chamber. When the sealing means switch to the open position, the first fluid is mixed with the second fluid, the pressure in the dispensing group increases and the step of dispensing coffee through the filter holder begins.

Advantageously, the coffee maker allows a detection of the pressure in the third chamber. Indeed, a pressure sensor is mounted on the auxiliary conduit, which pressure sensor detects the trend of the pressure in the second chamber and therefore also in the third chamber, such second and third chamber being in fluid communication with each other.

According to an advantageous aspect, the coffee maker allows the second chamber and the third chamber to be cleaned with vapor and/or with a detergent solution. In particular, when the sealing means are in closed position and when the second fluid comprises water in the gaseous state and/or a detergent solution, the second and third chamber may be closed by causing the second fluid to flow therein.

According to a further advantageous aspect, the coffee maker allows a detection of the temperature in the third chamber. Indeed, a temperature sensor is mounted on the auxiliary conduit, which temperature sensor is suitable to detect the trend of the temperature in the second chamber and therefore also in the third chamber, such second and third chamber being in fluid communication with each other.

The coffee maker advantageously can be heated quicker by virtue of the flow of the second fluid which may comprise water in the liquid state and/or vapor.

According to an advantageous aspect, the coffee maker can operate as a conventional E61 dispensing group or may manage a dual flow and therefore operate as a flow variator so as to promote dispensing the coffee. In particular, the flow of the second fluid is regulated by the solenoid valve of each branch of the plurality of branches fluidically connected to the auxiliary conduit. When the solenoid valves of the branches are all closed, the coffee maker operates as a conventional E61 dispensing group. When instead at least one solenoid valve of a branch of the plurality of branches is open, the second fluid flows inside the second chamber and the coffee maker may simultaneously manage the flow of the first and second fluid.

According to a further advantageous aspect, the coffee maker proves to be particularly versatile because the flow of the second fluid can be taken advantage of in various ways. In particular, the flow of the second fluid can promote a faster heating of the dispensing group, can clean the second and third chamber of deposited oil and grease and/or coffee residues. Or, when the second fluid is an alcohol solution, it can act as a drop of liquor for the coffee; finally, when the second fluid comprises milk, it can add a drop of milk to the coffee.

In addition to operating as a conventional E61 dispensing group, the coffee maker advantageously can operate with the pre-infusion deactivated. When the sealing means are engaged in the conventional E61 dispensing group so as to be arranged in open position, the first fluid fills the second chamber, the third chamber and wets the coffee powder (pre-infusion), which is followed by the coffee dispensing step. Instead, in the coffee maker according to the present invention, the second fluid has already filled the second and third chamber and the dispensing step begins immediately when the sealing means are arranged in open position. In further detail, when the first fluid is mixed with the second fluid, the third chamber is already at the optimal dispensing temperature. In other words, the second fluid wets the coffee powder and the first fluid no longer carries out the pre-infusion step.

According to an advantageous aspect, the coffee maker allows targeted cleaning of the second and third chamber alone. By virtue of the flow of the second fluid, which can comprise a detergent solution, a cleaning of the second and third chamber alone may be obtained when the sealing means are in closed position.

According to a further advantageous aspect, the coffee maker can operate to suction the infusion fluid residue. In other words, the infusion fluid residue can be discharged through the auxiliary conduit so as to drain all the oil and grease deposits and/or coffee residues from the second and third chamber.

The presence of the tang in the coffee maker advantageously can be eliminated from the dispensing group. In particular, the tang serves to discharge water, oil and grease deposits and/or coffee residues from the second chamber. However, the presence of the tang is no longer required due to the presence of the auxiliary conduit which can also operate to suction the infusion fluid residue.

According to an advantageous aspect, the coffee maker allows the infusion pressure for dispensing the coffee through the filter holder to be regulated. Indeed, the pressure of the flow of the second fluid can be regulated by at least one solenoid valve of at least one branch of the plurality of branches and therefore, a targeted control of the infusion pressure is possible.

A person skilled in the art may make changes and adaptations to the embodiments of the coffee maker and the dispensing method according to the invention or can replace elements with others which are functionally equivalent to satisfy contingent needs without departing from the scope of protection of the following claims. All the features described above as belonging to one possible embodiment can be implemented independently from the other described embodiments.

## Claims

1. A coffee maker (1) for domestic use comprising a dispensing group (2), for example of the E61 type, suitable to be connected to a first heating group of a first fluid, wherein the dispensing group (2) comprises:
A) a group body (21) on which a filter holder is removably mountable and in which a first chamber (211) provided with an inlet mouth (211i) and an outlet mouth (211o), a second chamber (212), and a third chamber (213) suitable to house the filter holder, are formed fluidically in a cascade;
B) sealing means (22), partially housed in the first chamber (211) and in the second chamber (212), so as to block the flow of the first fluid between said first chamber and second chamber, said sealing means being configurable between an open position, in which the first chamber (211) is in fluid communication with the third chamber (213), and a closed position, in which the first fluid is suitable to flow inside the first chamber (211) entering from the inlet mouth (211i) and coming out of the outlet mouth (211o); and
C) command means (23) comprising a cam (231) housed in the second chamber (212), the cam being rotatable so as to selectively engage the sealing means by positioning them in the open position or in the closed position,
and wherein the coffee maker further comprises:
i) a fluid inlet conduit (3) fluidically connected to the inlet mouth (211i) and suitable to be connected to the first heating group;
ii) a fluid outlet conduit (4) fluidically connected to the outlet mouth (211o) and suitable to be connected to the first heating group,
the coffee maker being **characterized in that** the second chamber (212) is provided with an auxiliary mouth (212a) fluidically connected to an auxiliary conduit (5) connectable to feeding and/or suctioning means for a second fluid, wherein the first heating group or a second heating group is configured to heat said second fluid.

2. Coffee maker (1) according to claim 1, further comprising a manifold (50) fluidically connected to the auxiliary conduit (5), said manifold (50) further being fluidically connected to a plurality of branches (51), preferably three, wherein each branch (511; 512; 513) of said plurality of branches (51) comprises a solenoid valve (5110; 5120; 5130) for regulating the flow of the second fluid.

3. Coffee maker (1) according to claim 2, wherein the flow of the second fluid is regulated by the solenoid valve (5110; 5120; 5130) of a branch (511; 512; 513) of the plurality of branches (51).

4. Coffee maker (1) according to any one of the preceding claims, comprising the feeding and/or suctioning means and the first heating group of the first fluid.

5. Coffee maker (1) according to claim 4, wherein the feeding and/or suctioning means comprise the first heating group.

6. Coffee maker (1) according to claim 4 or 5, wherein the feeding and/or suctioning means comprise a second heating group fluidically connected to the dispensing group (2) through the auxiliary conduit (5).

7. Coffee maker according to any one of claims 4 to 6, wherein the feeding and/or suctioning means comprise a plurality of feeding groups fluidically connected to the dispensing group (2) through the auxiliary conduit (5), and wherein each feeding group of the plurality of feeding groups is suitable to feed the auxiliary conduit (5) with a respective fluid, such as for example water in the liquid state and/or gaseous state, or an alcohol solution, a detergent solution, milk or a combination thereof.

8. Coffee maker according to any one of claims 4 to 7, wherein the feeding and/or suctioning means comprise a fluid discharge group fluidically connected to the dispensing group (2) through the auxiliary conduit (5), said fluid discharge group being suitable to collect, after infusion, the residue of an infusion fluid.

9. Coffee maker (1) according to any one of the preceding claims, comprising a base surface (Sb) suitable to be substantially resting on a base plane (B), and wherein the cam (231) rotates around a hinge (232) which defines a cam rotation axis (R) substantially parallel to the base plane (B), the hinge (232) lying on a hinge plane (H) containing the cam rotation axis (R), so that the auxiliary mouth (212a) formed in the second chamber (212) is in a first half-space delimited by the hinge plane (H) in a position proximal to the outlet mouth (211o), or is in the second half-space opposite to the first, in a distal position with respect to the outlet mouth (211o).

10. Coffee maker (1) according to claim 9, wherein the inlet mouth (211i) and the outlet mouth (211o) are aligned along an infusion plane (I) substantially orthogonal to the base plane (B), and wherein the auxiliary mouth (212a) lies on an auxiliary plane (A) parallel to the infusion plane (I).

11. Coffee maker (1) according to any one of the preceding claims, comprising a pressure sensor mounted on the auxiliary conduit (5) in the vicinity of the auxiliary mouth (212a).

12. Coffee maker (1) according to any one of the preceding claims, comprising a temperature sensor mounted on the auxiliary conduit (5) in the vicinity of the auxiliary mouth (212a).

13. Method of dispensing a coffee-based beverage comprising the following steps:
- providing a coffee maker (1) according to any one of claims 1 to 12;
- heating a first fluid with a first heating group;
- heating a second fluid with a first heating group or with a second heating group;
- arranging the sealing means (22) in the open position;
- mixing the first fluid and the second fluid in the second chamber (212) so as to form an infusion fluid;
- dispensing the beverage.

14. Method for dispensing a coffee-based beverage according to claim 13, wherein the coffee maker (1) is provided with feeding and/or suctioning means fluidically connected to the auxiliary conduit (5), the method comprising a step of suctioning the residue of an infusion fluid through the actuation of the feeding and/or suctioning means at the end of the dispensing of the beverage.

15. Method for dispensing a coffee-based beverage according to claim 13 or 14, further comprising a preheating step which involves heating the second chamber (212) with the second fluid which is at a temperature and/or at a pressure different from those of the first fluid.

16. Method of dispensing a coffee-based beverage according to claim 13 or 14, further comprising a preheating step which involves heating the second chamber (212) with the second fluid which is at a temperature and/or pressure equal to those of the first fluid.

17. Method for dispensing a coffee-based beverage according to any one of claims 13 to 16, wherein the coffee maker (1) is provided with feeding and/or suctioning means which comprise a plurality of feeding groups fluidically connected to the dispensing group (2) through the auxiliary conduit (5), the method providing that each feeding group of the plurality of feeding groups feed the auxiliary conduit with a respective fluid, such as for example water in the liquid state and/or gaseous state, or an alcoholic solution, a detergent solution, milk or a combination thereof, each fluid flowing in a branch (511; 512; 513) of the plurality of branches (51) to then mix along the auxiliary conduit (5) so as to form the second fluid.

18. Method for dispensing a coffee-based beverage according to any one of claims 13 to 17, further comprising the pressure detection step which provides for detecting the pressure in the second chamber (212) with the pressure sensor and, in the event of lowering of the pressure below a predetermined threshold value, operating the feeding and/or suctioning means so as to bring the pressure of the second chamber above the threshold pressure.

19. Method for dispensing a coffee-based beverage according to any one of claims 13 to 18, further comprising the temperature detection step which provides for detecting the temperature in the second chamber (212) with the temperature sensor and, in the event of lowering of the temperature below a predetermined threshold value, operating the feeding and/or suctioning means so as to bring the temperature of the second chamber above the threshold temperature.

## Patentansprüche

1. Kaffeemaschine (1) für den Heimgebrauch, umfassend eine Ausgabegruppe (2), zum Beispiel vom Typ E61, die dafür geeignet ist, mit einer ersten Heizgruppe eines ersten Fluids verbunden zu werden, wobei die Ausgabegruppe (2) Folgendes umfasst:
A) einen Gruppenkörper (21), an dem eine Filterhalterung entfernbar befestigbar ist, und in dem eine erste Kammer (211), die mit einer Einlassöffnung (211i) und einer Auslassöffnung (211o) versehen ist, eine zweite Kammer (212) und eine dritte Kammer (213), geeignet zum Aufnehmen der Filterhalterung, fluidisch in einer Kaskade gebildet sind;
B) Dichtungsmittel (22), die teilweise in der ersten Kammer (211) und in der zweiten Kammer (212) aufgenommen sind, um den Strom des ersten Fluids zwischen der ersten Kammer und der zweiten Kammer zu verhindern, wobei die Dichtungsmittel zwischen einer geöffneten Stellung, in der die erste Kammer (211) in Fluidverbindung mit der dritten Kammer (213) steht, und einer geschlossenen Stellung, in der das erste Fluid in der Lage ist, in der ersten Kammer (211) zu strömen, indem es aus der Einlassöffnung (211i) eintritt und aus der Auslassöffnung (211o) austritt, konfigurierbar sind; und
C) Befehlsmittel (23), die einen Nocken (231) umfassen, der in der zweiten Kammer (212) aufgenommen ist, wobei der Nocken drehbar ist, um die Dichtungsmittel selektiv in Eingriff zu nehmen, indem er sie in der geöffneten Stellung oder in der geschlossenen Stellung positioniert,
und wobei die Kaffeemaschine ferner Folgendes umfasst:
i) eine Fluideinlassleitung (3), die fluidisch mit der Einlassöffnung (211i) verbunden ist und dafür geeignet ist, mit der ersten Heizgruppe verbunden zu werden;
ii) eine Fluidauslassleitung (4), die fluidisch mit der Auslassöffnung (211o) verbunden ist und dafür geeignet ist, mit der ersten Heizgruppe verbunden zu werden,
wobei die Kaffeemaschine **dadurch gekennzeichnet ist, dass** die zweite Kammer (212) mit einer Nebenöffnung (212a) versehen ist, die fluidisch mit einer Nebenleitung (5) verbunden ist, die mit Zuführ- und/oder Ansaugmitteln für ein zweites Fluid verbindbar ist, wobei die erste Heizgruppe oder eine zweite Heizgruppe ausgestaltet ist, das zweite Fluid zu erwärmen.

2. Kaffeemaschine (1) nach Anspruch 1, die ferner einen Verteiler (50) umfasst, der fluidisch mit der Nebenleitung (5) verbunden ist, wobei der Verteiler (50) ferner fluidisch mit einer Vielzahl von Abzweigungen (51), vorzugsweise drei, verbunden ist, wobei jede Abzweigung (511; 512; 513) der Vielzahl von Abzweigungen (51) ein Solenoidventil (5110; 5120; 5130) zum Regeln des Stroms des zweiten Fluids umfasst.

3. Kaffeemaschine (1) nach Anspruch 2, wobei der Strom des zweiten Fluids von dem Solenoidventil (5110; 5120; 5130) einer ersten Abzweigung (511; 512; 513) der Vielzahl von Abzweigungen (51) geregelt wird.

4. Kaffeemaschine (1) nach einem beliebigen der vorhergehenden Ansprüche, die die Zuführ- und/oder Ansaugmittel und die erste Heizgruppe des ersten Fluids umfasst.

5. Kaffeemaschine (1) nach Anspruch 4, wobei die Zuführ- und/oder Ansaugmittel die erste Heizgruppe umfassen.

6. Kaffeemaschine (1) nach Anspruch 4 oder 5, wobei die Zuführ- und/oder Ansaugmittel eine zweite Heizgruppe umfassen, die durch die Nebenleitung (5) fluidisch mit der Ausgabegruppe (2) verbunden ist.

7. Kaffeemaschine nach einem beliebigen der Ansprüche 4 bis 6, wobei die Zuführ- und/oder Ansaugmittel eine Vielzahl von Zuführgruppen umfassen, die durch die Nebenleitung (5) fluidisch mit der Ausgabegruppe (2) verbunden sind, und wobei jede Zuführgruppe der Vielzahl von Zuführgruppen dafür geeignet ist, die Nebenleitung (5) mit einem jeweiligen Fluid, wie beispielsweise Wasser im flüssigen Zustand und/oder gasförmigen Zustand, oder einer alkoholischen Lösung, einer Reinigungslösung, Milch oder einer Kombination davon zu speisen.

8. Kaffeemaschine nach einem beliebigen der Ansprüche 4 bis 7, wobei die Zuführ- und/oder Ansaugmittel eine Fluidabgabegruppe umfassen, die durch die Nebenleitung (5) fluidisch mit der Ausgabegruppe (2) verbunden ist, wobei die Fluidabgabegruppe dafür geeignet ist, nach Aufguss, die Rückstände eines Aufgussfluids aufzufangen.

9. Kaffeemaschine (1) nach einem beliebigen der vorhergehenden Ansprüche, die eine Basisfläche (Sb) umfasst, die dafür geeignet ist, im Wesentlichen auf einer Basisebene (B) aufzuliegen, und wobei sich der Nocken (231) um ein Gelenk (232) dreht, das eine Nockendrehachse (R) definiert, die im Wesentlichen parallel zu der Basisebene (B) ist, wobei das Gelenk (232) auf einer Gelenkebene (H) liegt, die die Nockendrehachse (R) umfasst, sodass sich die Nebenöffnung (212a), die in der zweiten Kammer (212) gebildet ist, in einem ersten Halbraum, der durch die Gelenkebene (H) begrenzt wird, in einer Position proximal zu der Auslassöffnung (211o) befindet, oder sich in dem zweiten Halbraum, der dem ersten entgegengesetzt ist, in einer distalen Position in Bezug auf die Auslassöffnung (211o) befindet.

10. Kaffeemaschine (1) nach Anspruch 9, wobei die Einlassöffnung (211i) und die Auslassöffnung (211o) entlang einer Aufgussebene (I) im Wesentlichen orthogonal zu der Basisebene (B) ausgerichtet sind, und wobei die Nebenöffnung (212a) auf einer Nebenebene (A) liegt, die parallel zu der Aufgussebene (I) ist.

11. Kaffeemaschine (1) nach einem beliebigen der vorhergehenden Ansprüche, die einen Drucksensor umfasst, der an der Nebenleitung (5) in der Nähe der Nebenöffnung (212a) befestigt ist.

12. Kaffeemaschine (1) nach einem beliebigen der vorhergehenden Ansprüche, die einen Temperatursensor umfasst, der an der Nebenleitung (5) in der Nähe der Nebenöffnung (212a) befestigt ist.

13. Verfahren zum Ausgeben eines kaffeebasierten Getränks, das die folgenden Schritte umfasst:
- Bereitstellen einer Kaffeemaschine (1) nach einem beliebigen der Ansprüche 1 bis 12;
- Erwärmen eines ersten Fluids mit einer ersten Heizgruppe;
- Erwärmen eines zweiten Fluids mit einer ersten Heizgruppe oder mit einer zweiten Heizgruppe;
- Anordnen der Dichtungsmittel (22) in der geöffneten Stellung;
- Mischen des ersten Fluids und des zweiten Fluids in der zweiten Kammer (212), um ein Aufgussfluid zu bilden;
- Ausgeben des Getränks.

14. Verfahren zum Ausgeben eines kaffeebasierten Getränks nach Anspruch 13, wobei die Kaffeemaschine (1) mit Zuführ- und/oder Ansaugmitteln versehen ist, die fluidisch mit der Nebenleitung (5) verbunden sind, wobei das Verfahren einen Schritt des Ansaugens der Rückstände eines Aufgussfluids durch die Betätigung der Zuführ- und/oder Ansaugmittel am Ende des Ausgebens des Getränks umfasst.

15. Verfahren zum Ausgeben eines kaffeebasierten Getränks nach Anspruch 13 oder 14, das ferner einen Vorwärmschritt umfasst, der ein Erwärmen der zweiten Kammer (212) mit dem zweiten Fluid beinhaltet, das eine Temperatur und/oder einen Druck aufweist, die bzw. der sich von denen des ersten Fluids unterscheidet.

16. Verfahren zum Ausgeben eines kaffeebasierten Getränks nach Anspruch 13 oder 14, das ferner einen Vorwärmschritt umfasst, der ein Erwärmen der zweiten Kammer (212) mit dem zweiten Fluid beinhaltet, das eine Temperatur und/oder einen Druck aufweist, die bzw. der gleich denen des ersten Fluids ist.

17. Verfahren zum Ausgeben eines kaffeebasierten Getränks nach einem beliebigen der Ansprüche 13 bis 16, wobei die Kaffeemaschine (1) mit Zuführ- und/oder Ansaugmitteln versehen ist, die eine Vielzahl von Zuführgruppen umfassen, die durch die Nebenleitung (5) fluidisch mit der Ausgabegruppe (2) verbunden sind, wobei das Verfahren vorsieht, dass jede Zuführgruppe der Vielzahl von Zuführgruppen die Nebenleitung mit einem jeweiligen Fluid, wie beispielsweise Wasser im flüssigen und/oder gasförmigen Zustand, oder einer alkoholischen Lösung, einer Reinigungslösung, Milch oder einer Kombination davon speist, wobei jedes Fluid in eine Abzweigung (511; 512; 513) der Vielzahl von Abzweigungen (51) strömt, um sich anschließend entlang der Nebenleitung (5) zu vermischen, um das zweite Fluid zu bilden.

18. Verfahren zum Ausgeben eines kaffeebasierten Getränks nach einem beliebigen der Ansprüche 13 bis 17, das ferner den Druckerfassungsschritt umfasst, der ein Erfassen des Drucks in der zweiten Kammer (212) mit dem Drucksensor und, im Fall eines Absinkens des Drucks unter einen vorbestimmten Schwellenwert, ein Betreiben der Zuführ- und/oder Ansaugmittel, um den Druck der zweiten Kammer über den Schwellendruck zu bringen, vorsieht.

19. Verfahren zum Ausgeben eines kaffeebasierten Getränks nach einem beliebigen der Ansprüche 13 bis 18, das ferner den Temperaturerfassungsschritt umfasst, der ein Erfassen der Temperatur in der zweiten Kammer (212) mit dem Temperatursensor und, im Fall eines Absinkens der Temperatur unter einen vorbestimmten Schwellenwert, ein Betreiben der Zuführ- und/oder Ansaugmittel, um die Temperatur der zweiten Kammer über die Schwellentemperatur zu bringen, vorsieht.

## Revendications

1. Machine à café (1) pour un usage domestique comprenant un groupe de distribution (2), par exemple du type E61, approprié pour être relié à un premier groupe chauffant d'un premier fluide, le groupe de distribution (2) comprenant :
A) un corps de groupe (21) sur lequel un porte-filtre peut être monté de manière amovible et dans lequel une première chambre (211) dotée d'une embouchure d'entrée (211i) et d'une embouchure de sortie (211o), une deuxième chambre (212), et une troisième chambre (213) appropriée pour loger le porte-filtre, sont formées de manière fluidique en cascade ;
B) des moyens d'étanchéité (22), logés en partie dans la première chambre (211) et dans la deuxième chambre (212), de façon à bloquer l'écoulement du premier fluide entre ladite première chambre et ladite deuxième chambre, lesdits moyens d'étanchéité pouvant être configurés entre une position ouverte, dans laquelle la première chambre (211) est en communication de fluide avec la troisième chambre (213), et une position fermée, dans laquelle le premier fluide est approprié pour s'écouler à l'intérieur de la première chambre (211) entrant à partir de l'embouchure d'entrée (211i) et sortant de l'embouchure de sortie (211o) ; et
C) des moyens de commande (23) comprenant une came (231) logée dans la deuxième chambre (212), la came pouvant tourner de façon à mettre en prise de manière sélective les moyens d'étanchéité en les positionnant dans la position ouverte ou dans la position fermée,
et la machine à café comprenant en outre :
i) un conduit d'entrée de fluide (3) relié de manière fluidique à l'embouchure d'entrée (211i) et approprié pour être relié au premier groupe chauffant ;
ii) un conduit de sortie de fluide (4) relié de manière fluidique à l'embouchure de sortie (211o) et approprié pour être relié au premier groupe chauffant,
la machine à café étant **caractérisée en ce que** la deuxième chambre (212) est dotée d'une embouchure auxiliaire (212a) reliée de manière fluidique à un conduit auxiliaire (5) pouvant être relié à des moyens d'apport et/ou d'aspiration pour un deuxième fluide, le premier groupe chauffant ou un deuxième groupe chauffant étant configurés pour chauffer ledit deuxième fluide.

2. Machine à café (1) selon la revendication 1, comprenant en outre un collecteur (50) relié de manière fluidique au conduit auxiliaire (5), ledit collecteur (50) étant en outre relié de manière fluidique à une pluralité de branches (51), de préférence trois, chaque branche (511 ; 512 ; 513) de ladite pluralité de branches (51) comprenant une électrovanne (5110 ; 5120 ; 5130) pour réguler l'écoulement du deuxième fluide.

3. Machine à café (1) selon la revendication 2, l'écoulement du deuxième fluide étant régulé par l'électrovanne (5110 ; 5120 ; 5130) d'une branche (511 ; 512 ; 513) de la pluralité de branches (51).

4. Machine à café (1) selon l'une quelconque des revendications précédentes, comprenant les moyens d'apport et/ou d'aspiration et le premier groupe chauffant du premier fluide.

5. Machine à café (1) selon la revendication 4, les moyens d'apport et/ou d'aspiration comprenant le premier groupe chauffant.

6. Machine à café (1) selon la revendication 4 ou 5, les moyens d'apport et/ou d'aspiration comprenant un deuxième groupe chauffant relié de manière fluidique au groupe de distribution (2) par l'intermédiaire du conduit auxiliaire (5).

7. Machine à café selon l'une quelconque des revendications 4 à 6, les moyens d'apport et/ou d'aspiration comprenant une pluralité de groupes d'apport reliés de manière fluidique au groupe de distribution (2) par l'intermédiaire du conduit auxiliaire (5), et chaque groupe d'apport de la pluralité de groupes d'apport étant approprié pour apporter au conduit auxiliaire (5) un fluide respectif, tel que par exemple de l'eau à l'état liquide et/ou à l'état gazeux, ou une solution d'alcool, une solution détergente, du lait ou une combinaison de ceux-ci.

8. Machine à café selon l'une quelconque des revendications 4 à 7, les moyens d'apport et/ou d'aspiration comprenant un groupe d'évacuation de fluide relié de manière fluidique au groupe de distribution (2) par l'intermédiaire du conduit auxiliaire (5), ledit groupe d'évacuation de fluide étant approprié pour recueillir, après infusion, le résidu d'un fluide d'infusion.

9. Machine à café (1) selon l'une quelconque des revendications précédentes, comprenant une surface de base (Sb) appropriée pour reposer sensiblement sur un plan de base (B), et la came (231) tournant autour d'une charnière (232) qui définit un axe de rotation de came (R) sensiblement parallèle au plan de base (B), la charnière (232) se situant sur un plan de charnière (H) contenant l'axe de rotation de came (R), de façon à ce que l'embouchure auxiliaire (212a) formée dans la deuxième chambre (212) soit dans un premier demi-espace délimité par le plan de charnière (H) dans une position proximale par rapport à l'embouchure de sortie (211o), ou soit dans le deuxième demi-espace opposé au premier, dans une position distale par rapport à l'embouchure de sortie (211o).

10. Machine à café (1) selon la revendication 9, l'embouchure d'entrée (211i) et l'embouchure de sortie (211o) étant alignées le long d'un plan d'infusion (I) sensiblement orthogonal au plan de base (B), et l'embouchure auxiliaire (212a) se situant sur un plan auxiliaire (A) parallèle au plan d'infusion (I).

11. Machine à café (1) selon l'une quelconque des revendications précédentes, comprenant un capteur de pression monté sur le conduit auxiliaire (5) à proximité de l'embouchure auxiliaire (212a).

12. Machine à café (1) selon l'une quelconque des revendications précédentes, comprenant un capteur de température monté sur le conduit auxiliaire (5) à proximité de l'embouchure auxiliaire (212a).

13. Procédé de distribution d'une boisson à base de café comprenant les étapes suivantes :
- la fourniture d'une machine à café (1) selon l'une quelconque des revendications 1 à 12 ;
- le chauffage d'un premier fluide avec un premier groupe chauffant ;
- le chauffage d'un deuxième fluide avec un premier groupe chauffant ou avec un deuxième groupe chauffant ;
- l'agencement des moyens d'étanchéité (22) dans la position ouverte ;
- le mélange du premier fluide et du deuxième fluide dans la deuxième chambre (212) de façon à former un fluide d'infusion ;
- la distribution de la boisson.

14. Procédé pour distribuer une boisson à base de café selon la revendication 13, la machine à café (1) étant dotée de moyens d'apport et/ou d'aspiration reliés de manière fluidique au conduit auxiliaire (5), le procédé comprenant une étape consistant à aspirer le résidu d'un fluide d'infusion par l'intermédiaire de l'actionnement des moyens d'apport et/ou d'aspiration à la fin de la distribution de la boisson.

15. Procédé pour distribuer une boisson à base de café selon la revendication 13 ou 14, comprenant en outre une étape de préchauffage qui implique un chauffage de la deuxième chambre (212) avec le deuxième fluide qui est à une température et/ou à une pression différentes de celles du premier fluide.

16. Procédé de distribution d'une boisson à base de café selon la revendication 13 ou 14, comprenant en outre une étape de préchauffage qui implique un chauffage de la deuxième chambre (212) avec le deuxième fluide qui est à une température et/ou une pression égales à celles du premier fluide.

17. Procédé pour distribuer une boisson à base de café selon l'une quelconque des revendications 13 à 16, la machine à café (1) étant dotée de moyens d'apport et/ou d'aspiration qui comprennent une pluralité de groupes d'apport reliés de manière fluidique au groupe de distribution (2) par l'intermédiaire du conduit auxiliaire (5), le procédé prévoyant que chaque groupe d'apport de la pluralité de groupes d'apport apporte au conduit auxiliaire un fluide respectif, tel que par exemple de l'eau à l'état liquide et/ou à l'état gazeux, ou une solution d'alcool, une solution détergente, du lait ou une combinaison de ceux-ci, chaque fluide s'écoulant dans une branche (511 ; 512 ; 513) de la pluralité de branches (51) pour ensuite se mélanger le long du conduit auxiliaire (5) de façon à former le deuxième fluide.

18. Procédé pour distribuer une boisson à base de café selon l'une quelconque des revendications 13 à 17, comprenant en outre l'étape de détection de pression qui fournit une détection de la pression dans la deuxième chambre (212) avec le capteur de pression et, en cas d'abaissement de la pression en dessous d'une valeur seuil prédéterminée, un fonctionnement des moyens d'apport et/ou d'aspiration de façon à amener la pression de la deuxième chambre au-dessus de la pression seuil.

19. Procédé pour distribuer une boisson à base de café selon l'une quelconque des revendications 13 à 18, comprenant en outre l'étape de détection de température qui fournit une détection de la température dans la deuxième chambre (212) avec le capteur de température et, en cas d'abaissement de la température en dessous d'une valeur seuil prédéterminée, un fonctionnement des moyens d'apport et/ou d'aspiration de façon à amener la température de la deuxième chambre au-dessus de la température seuil.
